(19) **Europäisches Patentamt**

**European Patent Office**

**Office européen des brevets**

(11) Veröffentlichungsnummer: **0 293 721 B1**

(12) # EUROPÄISCHE PATENTSCHRIFT

(45) Veröffentlichungstag der Patentschrift:
29.05.91 Patentblatt 91/22

(51) Int. Cl.⁵: **F16J 12/00, F16L 13/02, F16L 41/02, F17C 1/12, F22B 37/22, G21D 5/12**

(21) Anmeldenummer: **88108265.5**

(22) Anmeldetag: **24.05.88**

(54) Druckbehälter mit einem Anschlussstutzen mit einem Thermoschutz.

(30) Priorität: 04.06.87 DE 3718785

(43) Veröffentlichungstag der Anmeldung:
07.12.88 Patentblatt 88/49

(45) Bekanntmachung des Hinweises auf die Patenterteilung:
29.05.91 Patentblatt 91/22

(84) Benannte Vertragsstaaten:
CH DE ES FR LI SE

(56) Entgegenhaltungen:
DE-A- 2 346 411
DE-B- 1 130 654
DE-B- 1 212 374
FR-A- 2 431 650
US-A- 3 097 084
US-A- 3 122 004
US-A- 4 168 071

(73) Patentinhaber: Siemens Aktiengesellschaft
Wittelsbacherplatz 2
W-8000 München 2 (DE)

(72) Erfinder: Sterk, Zvonimir, Dipl.-Ing.
Vogelherd 109
W-8520 Erlangen (DE)

## Beschreibung

Die Erfindung betrifft einem Druckbehälter mit einer Behälterwand, in der ein innen mit einer Abstüfüng versehener Anschlußstutzen sitzt, der mit einem Thermoschutz in Form eines ersten Rohres versehen ist, das von der Abstufung ausgeht und sich mit seinem freien Ende in den Behälter erstreckt.

Mit einem solchen Thermoschutz, wie er z.B. in der europäischen Patentschrift EP-A-0 012 057 dargestellt ist, soll vermieden werden, daß durch den Stutzen eintretendes Medium mit einer wesentlich unterschiedlichen Temperatur zu Wärmespannungen in dem Druckbehälter führt. Anders ausgedrückt, bildet das Rohr einen Ringraum mit einer Totwasserzone, der als Wärmeisolierung wirkt.

Die Erfindung geht von der Aufgabe aus, einen Thermoschutz der vorgenannten Art zu verbessern, damit insbesondere im Bereich der Verbindungsstellen noch weniger Spannungen eingeleitet werden können. Solche Verbindungsstellen, z.B. der Ausgangspunkt des Rohres von der Abstüfüng des Anschlüßstutzen bilden nämlich besondere Gefahrenpunkte.

Erfindungsgemäß ist vorgesehen, daß zwischen dem freien Ende des ersten Rohres der Abstufung Knaggen an der Innenseite des Rohres vorgesehen sind und daß mit den Knaggen Finger verbunden sind, die durch Schlitze in einem zweiten Rohr gebildet werden, das sich mit Abstand im Inneren des Anschlußstutzens über die Abstufung hieraus erstreckt.

Bei der Erfindung ergibt sich ein sozusagen doppelter Thermoschutz, bei dem die Verbinaungsstelle zwischen dem ersten Rohr und dem Anschlußstutzen durch das zweite Rohr besonders abgedeckt ist. Andererseits liegt die Befestigungsstelle des zweiten Rohres in einem weniger kritischen Bereich. Sie ist darüber hinaus so ausgeführt, daß auch bei starken Wärmebewegungen, wie sie durch besonders hohe Temperaturunterschiede ausgelöst werden, keine unzulässigen Spannungen induziert werden, weil durch aie Finger und Knaggen eine gewisse Nachgiebigkeit erreicht ist.

Das den Knaggen abgekehrte Ende des zweiten Rohres kann mit seiner Außenseite dichtend an der Innenseite des Stutzens anliegen, damit eine Totwasserzone mit geringen Temperaturschwankungen entsteht. Zu diesem Zweck kann das dichtende Ende vorteilhaft verdickt sein. In dem verdickten Ende können Nuten zur Aufnahme von Dichtungsringen vorgesehen sein. Als Dichtungsringe eignen sich z.B. Rundprofilringe aus einem leicht verformbaren Metall, z.B. aus austenitischem Material.

Das die Finger bildende Ende des zweiten Rohres kann gleichfalls verdickt sein. Dies fördert ebenso die Abdichtung des zur Wärmeisolation gewünschten Ringraumes. Außerdem kann damit die Befestigung erleichtert werden, wie später anhand des Ausführungsbeispiels noch näher erläutert wird.

Die Länge des ersten Rohres sollte etwa so groß wie sein Durchmesser sein. Dies hat sich bei ausgeführten Konstruktionen besonders bewährt. Allerdings ist der Wert ein Näherungswert, weil auch Längen vom 0,8 bis 1,5-fachen des Durchmessers vorteilhaft verwendet werden können.

Die Länge des zweiten Rohres sollte mindestens das Doppelte seines Durchmessers betragen. Jedenfalls sollte sie so groß gewählt werden, daß sie bis zum Ende eines sich gegebenenfalls verjüngenden Bereiches der Außenwand des Anschlußstutzens reicht.

Das freie Ende des ersten Rohres kann mit Vorsprüngen an der Innenseite des Anschlußstutzens geführt sein, um starke hydraulische Kräfte unmittelbar in die Wand des Anschlußstutzens. Dabei ist die Anbringung der Vorsprünge an dem ersten Rohr günstiger als die in der europäischen Patentschrift 00 12 057 dargestellte Anbringung der Vorsprünge an der Druckbehälterwand.

Zur näheren Erläuterung der Erfindung wird anhand der Zeichnung ein Ausführungsbeispiel beschrieben. Es zeigt

FIG 1 einen Längsschnitt durch den Anschlußstutzen in einer Druckbehälterwand,

FIG 2 einen Querschnitt durch den Anschlußstutzen,

FIG 3 in vergrößertem Maßstab die Ausbildung der Befestigungs stelle zwischen dem ersten und dem zweiten Rohr.

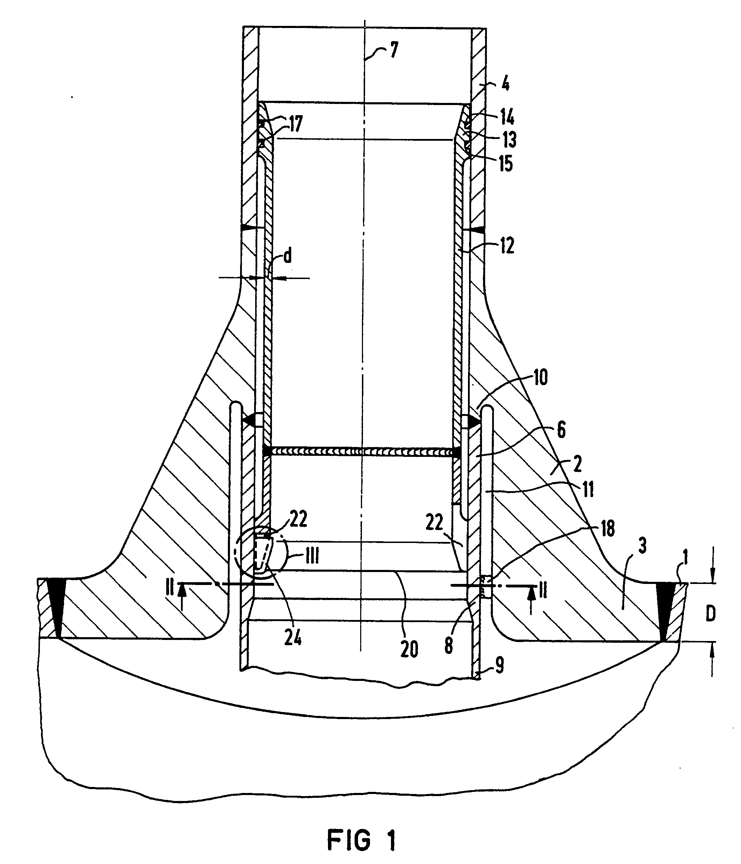

Der in FIG 1 dargestellte Druckbehälter 1 ist ein Dampferzeuger für ein Kernkraftwerk. Dabei handelt es sich um einen Stahlbehälter mit etwa 4,5 m Durchmesser und einer Wanddicke D von z.B. 12 cm. Ein Anschlußstutzen 2 ist in den Behälter so eingefügt, daß er mit seinem einen Ende einen Teil der Behälterwand 3 bildet. Der Anschlußstutzen 2 hat einen Innendurchmesser von 42 cm und ist für die Einleitung von Speisewasser vorgesehen, das mit einer Speisewasserleitung 4 zugeführt wird. Das Speisewasser hat im Normalfall eine Temperatur von etwa 200 °C, während im Dampferzeuger eine Temperatur von etwa 300 °C herrscht. Im Notfall kann durch die Speisewasserleitung 4 noch kälteres Wasser z.B. mit Raumtemperatur (20 °C und weniger) in den Dampferzeuger 1 eingespeist werden.

Als Thermoschutz besitzt der Anschlußstutzen 2 ein erstes Rohr 6, das in der Verlängerung der Leitung 4 konzentrisch zur Rohrachse 7 verläuft. Das Rohr 6 erstreckt sich zur Innenseite des Dampferzeugers 1. Dort ist an dem sogenannten freien Ende 8 eine Verteilerleitung 9 angeschweißt. Das andere, feste Ende des ersten Rohres 6 zeht von Abstüfüng 10 im Körper des Anschlußstutzens 2 eins, in dem ein Ringraum 11 abgetrennt wird. Zur Aufnahme von großen hydraulischen Kräften, die von der Verteilerleitung 9 ausgehen können, sind an der Außenseite des Rohres 6 vier Klötzchen 18 angeschweißt, die als Vorsprünge die Auslenkung gegen die Innenwand des Anschlußstutzens 2 begrenzen.

In der Leitung 4 ist als weiterer Thermoschutz ein zweites Rohr 12 vorgesehen. Das Rohr 12 hat einen um etwa das Doppelte seiner Wanddicke d kleineren Innendurchmesser als der Stutzen 2 und ist mehr als doppelt so lang wie sein Durchmesser. Das im Inneren des Stutzens 2 gelegene Ende 13 ist verdickt, so daß es an der Innenwand der Leitung 4 anliegt. Dort sind zwei Rechtecknuten 14 und 15 vorgesehen, in denen Rundprofilringe 17 aus einem leicht verformbaren Metall angeordnet sind. Sie ergeben einen dichten Abschluß zwischen der Innenwand des Rohres 4 und dem von der Verdickung 13 gebildeten Vorsprung.

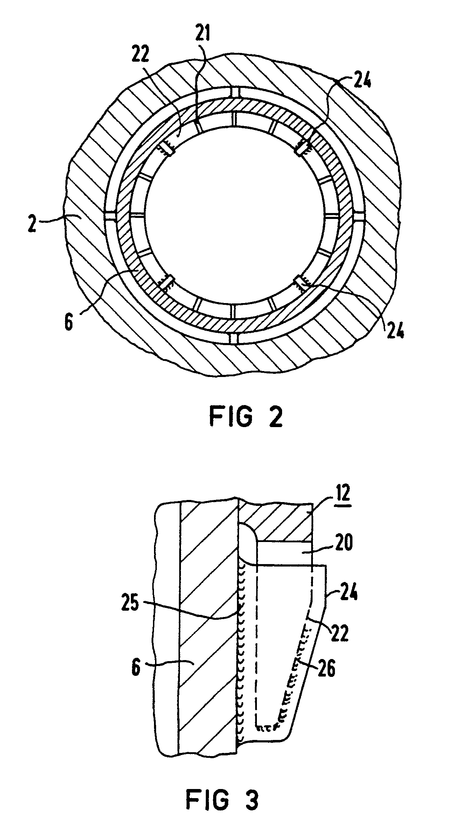

Das andere Ende 20 des zweiten Rohres 12 ist ebenfalls verdickt, so daß ein Vorsprung gebildet wird, der an der Innenseite des ersten · Rohres 6 anliegt. In diesem Endbereich 20 ist das Rohr 12 geschlitzt, wie in den Figuren 2 und 3 zu sehen ist. Die Schlitze 21 erstrecken sich über ein Mehrfaches der Wanddicke des Rohres 12 und bilden Finger 22. Einzelne dieser Finger, insgesamt acht, sind mit Knaggen 24 verschweißt, die in gleichmäßigem Umfangsabstand an der Innenseite des ersten Rohres 6 angeschweißt sind. Die Schweißnaht dort ist mit 25 bezeichnet, die Schweißnaht zwischen den Knaggen 24 und den Fingern 22 mit 26.

Die FIG 1 läßt deutlich erkennen, daß das erste Rohr 6 einen ersten Thermoschutz für den Bereich des Anschlußstutzens 2 bildet. Zusätzlich wird der gefährdete Bereich der Ausgangsstelle oder Abstufung 10 durch das zweite Rohr 12 abgedeckt. Dieses Rohr ist aufgrund der Schweißverbindung zwischen den Knaggen 24 und den Fingern 22 so nachgiebig angebracht, daß bei radialen Dehnungen keine unzulässig großen Spannungen entstehen können. Axiale Dehnungen sind sowohl für das erste Rohr 6 als auch für das zweite Rohr 12 möglich. Vor allem aber ist aie empfindliche Verbindungsstelle 10 zwischen dem ersten Rohr 6 und dem Anschlußstutzen 2 durch das zweite Rohr 12 abgeschirmt.

## Ansprüche

1. Druckbehälter (1) mit einer Behälterwand (3), in der ein innen mit einer Abstufung (10) versehener Anschlußstutzen (2) sitzt, der mit einem Thermoschutz in Form eines ersten Rohres (6) versehen ist, das von der Abstufung (10) ausgeht und sich mit seinem freien Ende (8) in den Behälter (1) erstreckt, **dadurch gekennzeichnet,**
   – daß zwischen dem freien Ende (8) des ersten Rohres (6) und der Abstufung (10) Knaggen (24) an der Innenseite des Rohres (6) vorgesehen sind und
   – daß mit den Knaggen (24) Finger (22) verbunden sind, die durch Schlitze (21) in einem zweiten Rohr (12) gebildet werden, das sich im Inneren des Anschlußstutzens (2) über die Abstufung (10) hinaus erstreckt.

2. Druckbehälter (1) nach Anspruch 1, **dadurch gekennzeichnet,** daß das den Knaggen (24) abgekehrte Ende (13) des zweiten Rohres (12) mit seiner Außenseite dichtend an der Innenseite des Stutzens (2) anliegt.

3. Druckbehälter (1) nach Anspruch 2, **dadurch gekennzeichnet,** daß das dichtende Ende (13) verdickt ist.

4. Druckbehälter (1) nach nach Anspruch 3, **dadurch gekennzeichnet,** daß in dem verdickten Ende (13) Nuten (14, 15) zur Aufnahme von Dichtungsringen (17) vorgesehen sind.

5. Druckbehälter (1) nach einem der Ansprüche 1 bis 4, **dadurch gekennzeichnet,** daß das die Finger (22) bildende Ende (20) des zweiten Rohres (12) verdickt ist.

6. Druckbehälter nach einem der Ansprüche 1 bis 5, **dadurch gekennzeichnet,** daß die Länge des ersten Rohres (6) etwa so groß wie sein Durchmesser ist.

7. Druckbehälter (1) nach einem der Ansprüche 1 bis 6, **dadurch gekennzeichnet,** daß die Länge des zweiten Rohres (12) mindestens das Doppelte seines Durchmessers beträgt.

8. Druckbehälter (1) nach einem der Ansprüche 1 bis 7, **dadurch gekennzeichnet,** daß das freie Ende (8) des ersten Rohres (6) mit Vorsprüngen (18) an der Innenseite des Anschlußstutzens (2) geführt ist.

## Claims

1. Pressure container (1) having a container wall (3), in which there is disposed a connector (2), provided on the inside with a stepping (10), the connector being provided with a thermal protection in the form of a first tube (6), which emanates from the stepping (10) and extends with its free end (8) into the container (1), characterized in that,
   – between the free end (8) of the first tube (6) and the stepping (10) brackets (24) are provided on the inside of the tube (6) and
   – there are connected to the brackets (24) fingers (22) which are formed by slots (21) in a second tube (12), which extends in the inside of the connector (2) out over the stepping (10).

2. Pressure container (1) according to claim 1, characterized in that the end (13) of the second tube (12) directed away from the brackets (24) abuts with its outside in a sealing manner against the inside of the connector (2).

3. Pressure container (1) according to claim 2, characterized in that the sealing end (13) is thickened.

4. Pressure container (1) according to claim 3, characterized in that in the thickened end (13) there are provided grooves (14, 15) for receiving sealing rings (17).

5. Pressure container (1) according to one of claims 1 to 4, characterized in that the end (20) of the second tube (12) forming the fingers (22) is thickened.

6. Pressure container according to one of claims 1 to 5, characterized in that the length of the first tube (6) is approximately as large as its diameter.

7. Pressure container (1) according to one of claims 1 to 6, characterized in that the length of the second tube (12) amounts to at least double its diameter.

8. Pressure container (1) according to one of claims 1 to 7, characterized in that the free end (8) of the first tube (6) is guided with projections (18) on the inside of the connector (2).

## Revendications

1. Cuve sous pression (1) ayant une paroi de cuve (3) dans laquelle est montée une tubulure de raccordement (2), qui est munie à l'intérieur d'un épaulement (10) et d'un dispositif de protection thermique sous la forme d'un premier tube (6), lequel est issu de l'épaulement (10) et s'étend par son extrémité libre (8) dans la cuve (1), caractérisée en ce que
   – il est prévu entre l'extrémité libre (8) du premier tube (6) et l'épaulement (10) des goussets (2 4) sur le côté intérieur du tube (6) et
   – aux goussets (24) sont reliés des doigts (22) formés par des fentes (21) ménagées dans un deuxième tube (12) qui s'étend à l'intérieur de la tubulure de raccordement (2) au-delà de l'épaulement (10).

2. Cuve sous pression (1) suivant la revendication 1, caractérisée en ce que l'extrémité du deuxième tube (12), qui est éloignée des goussets (24), s'applique par son côté extérieur de manière étanche sur le côté intérieur de la tubulure (2).

3. Cuve sous pression (1) suivant la revendication 2, caractérisée en ce que l'extrémité (13) d'étanchéité est épaissie.

4. Cuve sous pression (1) suivant la revendication 3, caractérisée en ce que dans l'extrémité (13) épaissie sont ménagées des gorges (14, 15) de réception de joints d'étanchéité annulaires (17).

5. Cuve sous pression (1) suivant l'une des revendications 1 à 4, caractérisée en ce que l'extrémité (20) du deuxième tube (12), qui forme les doigts (22), est épaissie.

6. Cuve sous pression suivant l'une des revendications 1 à 5, caractérisée en ce que la longueur du premier tube (6) est à peu près aussi grande que son diamètre.

7. Cuve sous pression (1) suivant l'une des revendications 1 à 6, caractérisée en ce que la longueur du deuxième tube (12) représente au moins le double de son diamètre.

8. Cuve sous pression (1) suivant l'une des revendications 1 à 7, caractérisée en ce que l'extrémité libre (8) du premier tube (6) est guidée par des parties saillantes (8) sur le côté intérieur de la tubulure de raccordement (2).

FIG 1

FIG 2

FIG 3